# FASCICULE DE BREVET EUROPEEN

(11) **EP 0 562 926 B1**
(45) Date de publication et mention de la délivrance du brevet: **07.02.1996**
(21) Numéro de dépôt: 93400711.3
(22) Date de dépôt: 19.03.1993
(51) Int. Cl.: B65G 47/51, B65G 51/03, B65G 29/02

(54) **Machine de stockage de récipients entre une machine amont délivrant des récipients et une machine aval utilisatrice**
Lagermaschine für Behälter zwischen einer stromaufwärts gelegenen Abgabemaschine zur Abgabe von Behältern und einer stromabwärts gelegenen Verwendungsmaschine
Storing machine for containers between an upstream machine delivering containers to a downstream user machine

(30) Priorité: 24.03.1992 FR 9203518
(43) Date de publication de la demande: 29.09.1993
(73) Titulaire: SIDEL, F- 76053 Le Havre Cedex (FR)
(72) Inventeur: Le Guyader, Jacques, F-76620 Le Havre (FR); La Barre, Paul, F-76310 Sainte-Adresse (FR)
(74) Mandataire: Gorree, Jean-Michel

(56) Documents cités:
- EP-A- 0 310 102
- EP-A- 0 344 417
- EP-A- 0 427 683
- GB-A- 2 170 169

## Description

La présente invention concerne d'une façon générale des perfectionnements apportés aux installations agencées pour convoyer des récipients, notamment des bouteilles ou analogues, entre une machine amont qui délivre des récipients et une machine aval qui est utilisatrice desdits récipients. Il peut s'agir par exemple d'une unité d'embouteillage dans laquelle la machine amont est une machine de fabrication de récipients tels que des bouteilles en matière plastique et la machine aval est une machine de remplissage desdites bouteilles ; mais bien entendu l'invention s'applique tout aussi bien à d'autres configurations d'unités (par exemple machine de remplissage et emballeuse ; ou bien machine de nettoyage de récipients de récupération et machine de remplissage ; etc).

Dans le cas d'une alimentation directe de la machine aval en récipients provenant de la machine amont, un arrêt de l'une de ces machines implique nécessairement l'arrêt de l'autre machine, ainsi en général que de l'ensemble de l'installation. Or, un tel arrêt est particulièrement désavantageux en raison de la perte de production, de la perte d'énergie, de la perte de matière première et, plus généralement, de la perte d'argent qu'il occasionne alors même que les machines autres que celle qui doit être arrêtée demeurent en mesure de fonctionner. Ces inconvénients sont encore plus marquants dans le cas de certaines machines, telles que les machines de fabrication de bouteilles en matière plastique, pour lesquelles les processus d'arrêt et de remise en marche s'accompagnent d'une perte de bouteilles utilisables mises au rebut et le processus de remise en marche est long ; un arrêt complet de ce type de machine doit donc être évité à tout prix.

Pour pallier cet inconvénient, il est connu d'interposer dans une ligne de convoyage, par exemple entre une machine de fabrication de bouteilles en matière plastique et une machine de remplissage, une unité tampon qui est apte à assurer une régulation du flux des récipients en déplacement entre la machine amont et la machine aval de façon qu'un arrêt de brève durée de l'une des machines amont ou aval ne nécessite pas l'arrêt de l'autre machine respectivement aval ou amont.

La fonction de tampon est obtenue couramment en donnant à la chaîne de convoyage entre les machines amont et aval une très grande longueur (qui par exemple peut atteindre une centaine de mètres dans certaines installations). Un tel agencement est très désavantageux car il nécessite une place importante pour la mise en place de la chaîne de convoyage ; pour gagner de la place au sol, il est connu de faire cheminer cette chaîne en hauteur, au-dessus du reste de l'installation, mais il en résulte une complexité de la chaîne de convoyage qui se traduit par un accroissement de son coût. De plus, l'établissement d'une chaîne de convoyage de très grande longueur dans un espace de dimensions limitées conduit à donner à cette chaîne une forme repliée sur elle-même, avec de nombreux virages et/ou coudes. Or, nombre de systèmes de convoyage fonctionnent de façon correcte en ligne droite, mais présentent des performances moindres dans des trajets courbes. L'amélioration du fonctionnement en courbe conduit à une complexité accrue, d'où, là aussi, à un matériel plus coûteux. En outre, le mètre linéaire d'une chaîne de convoyage, quel qu'en soit le principe de fonctionnement, est d'un prix élevé et toute augmentation de longueur est économiquement peu souhaitable; de plus, le convoyage sur de grandes longueurs a l'inconvénient d'augmenter le risque de rayer ou d'abimer les récipients.

La fonction de tampon peut également être réalisée en prévoyant des sections de garage raccordées aux convoyeurs principaux par des aiguillages. Là encore, un tel agencement nécessite beaucoup de place disponible et son érection en hauteur présente les mêmes inconvénients que dans le cas précédent. En outre les aiguillages sont des dispositifs très onéreux qui sont présents en grand nombre dans l'installation. Un dispositif de stockage de récipients qui comprend un tambour apte à être déplacé en rotation autour d'un axe longitudinal est décrit dans GB-A-2 170 169.

Enfin, on connaît encore des dispositifs tampons constitués par des silos dans lesquels les récipients sont stockés en vrac. De tels dispositifs présentent l'inconvénient d'abimer les récipients lors de leur stockage et de leur extraction des silos.

L'invention a essentiellement pour objet de remédier aux inconvénients précités des installations connues et de proposer une machine perfectionnée qui donne mieux satisfaction aux diverses exigences de la pratique, en particulier du fait qu'elle est beaucoup moins exigente en place, qu'elle est structurellement peu complexe et qu'elle est globalement moins onéreuse que les installations antérieures.

A ces fins, l'invention propose une machine de stockage de récipients, notamment de bouteilles ou analogues, destinée à être incluse entre une machine amont et une machine aval afin de régulariser le débit de convoyage des récipients circulant de la machine amont vers la machine aval en cas de ralentissement ou d'arrêt de brève durée de la machine amont ou de la machine aval, laquelle machine, étant agencée conformément à l'invention, se caractérise essentiellement en ce qu'elle comprend en combinaison :
- un bâti allongé,
- un tambour allongé apte à être déplacé en rotation autour d'un axe longitudinal, ledit tambour étant supporté à rotation par le susdit bâti,
- une pluralité de couloirs de cheminement prévus sur le tambour et régulièrement répartis angulairement sur la périphérie du tambour, ces couloirs étant agencés pour recevoir des récipients s'étendant sensiblement radialement en étant disposés les uns à la suite des autres,
- des moyens de déplacement du tambour agencés pour faire tourner le tambour pas par pas autour de son axe et amener sélectivement un couloir sélectionné en regard de moyens fixes d'entrée et de moyens fixes de sortie des récipients, lesquels moyens d'entrée et de sortie sont alignés l'un avec l'autre parallèlement à l'axe du tambour et sont supportés par les extrémités opposées du bâti, et
- des moyens pneumatiques de convoyage des récipients aptes à agir sur le col des récipients pour déplacer les récipients dans un couloir sélectionné amené en coïncidence avec les moyens d'entrée et de sortie des récipients, lesquels moyens pneumatiques sont supportés par le bâti et sont déplaçables radialement pour occuper deux positions fonctionnelles, savoir une position basse dans laquelle ils sont radialement rapprochés du tambour et coopèrent avec les goulots des récipients situés dans un couloir sélectionné présenté entre les moyens d'entrée et les moyens de sortie et sont aptes à faire avancer les récipients dans ledit couloir et une position haute dans laquelle ils sont radialement écartés du tambour pour dégager les goulots des récipients présents dans le couloir sélectionné s'étendant entre les moyens d'entrée et les moyens de sortie et autoriser la rotation du tambour.

Dans un mode de réalisation simple, chaque couloir comprend deux profilés longitudinaux parallèles supportés par un corps de tambour et agencés pour supporter à libre coulissement les récipients par leur col.

Pour obtenir un maintien et un guidage corrects des récipients dans les couloirs, il est souhaitable que chaque couloir comprenne en outre des guides longitudinaux parallèles supportés par le corps de tambour en étant écartés radialement des susdits profilés en direction de l'axe longitudinal du tambour et aptes à constituer un appui de guidage pour les corps des récipients engagés dans le couloir.

Pour étendre le domaine d'utilisation de la machine, on prévoit que les profilés et les guides longitudinaux soient réglables radialement et transversalement pour adapter le couloir à des récipients de dimensions différentes.

Dans un mode de réalisation qui est remarquablement efficace tout en mettant en oeuvre des moyens techniquement simples, les moyens fixes de sortie des récipients comprennent également une barrière mobile sélectivement et agencée pour fermer le couloir sélectionné situé en correspondance des moyens de sortie lors d'une phase de remplissage du couloir et pour ouvrir le couloir sélectionné situé en correspondance des moyens de sortie lorsque les récipients présents dans ledit couloir doivent être évacués hors de celui-ci.

Dans un mode de réalisation préféré, les moyens d'entrée, les moyens de sortie et les moyens de convoyage des récipients sont situés à la partie supérieure du bâti. Ainsi, les moyens de convoyage intégrés dans la machine se trouvent situés approximativement à la même hauteur que les moyens de convoyage situés en amont et en aval de la machine de stockage et il en résulte une simplification de mise en place de l'ensemble des moyens de convoyage reliant la machine amont à la machine aval.

Pour obtenir un fonctionnement fiable et éviter le coincement de récipients entre le tambour et des structures du bâti fixe (notamment les moyens d'entrée et les moyens de sortie), la machine comporte en outre des moyens de détection du remplissage d'un couloir sélectionné qui sont situés du côté des moyens d'entrée, lesquels moyens de détection sont couplés fonctionnellement aux moyens de convoyage des récipients pour commander le fonctionnement et l'arrêt de ces derniers en fonction du remplissage dudit couloir sélectionné.

Grâce aux dispositions conformes à l'invention, il est proposé une machine qui permet le stockage d'un grand nombre de récipients répartis dans plusieurs couloirs alors que la machine présente un encombrement relativement modeste qui n'est en rien comparable avec l'encombrement des diverses structures employées à ce jour dans le même but. A titre d'exemple, une machine équipée d'un tambour d'environ 6 mètres de long et pourvue de douze couloirs de stockage peut offrir une capacité maximale de l'ordre de 700 bouteilles en matière plastique d'une contenance de 1,5 litres.

Une machine de stockage conforme à l'invention est en mesure de conférer une grande souplesse d'exploitation à une ligne de production, par exemple à une ligne d'embouteillage, et permet d'éviter l'arrêt complet de la chaîne, avec tous les inconvénients inhérents, en cas d'arrêt de brève durée de l'une des machines de cette chaîne.

A cet effet, il est souhaitable que la machine de stockage de l'invention comporte des moyens de gestion de son fonctionnement aptes à commander sélectivement:
- le remplissage d'environ la moitié du nombre des couloirs et le maintien vide d'environ l'autre moitié du nombre des couloirs lorsque les machines amont et aval sont en fonctionnement normal,
- la mise en rotation pas par pas du tambour et le vidage successif des couloirs remplis de récipients lorsque la machine amont est arrêtée temporairement, de manière que la machine aval continue à être alimentée en récipients,
- la mise en rotation pas par pas du tambour et le remplissage successif des couloirs vides lorsque la machine aval est arrêtée temporairement, de manière que la machine amont puisse continuer à fonctionner. En considérant à nouveau l'exemple typique cité plus haut, la capacité de stockage mentionnée permet, par exemple en cas d'arrêt de la machine amont, d'assurer la fourniture de récipients à la machine aval pendant une durée de l'ordre de 2 minutes (la machine aval continuant à fonctionner à vitesse normale) à partir du tambour approximativement rempli à moitié. On dispose ainsi du laps de temps nécessaire pour effectuer une intervention rapide sur la machine amont (décoincement d'un récipient ; remplacement d'un organe d'accès facile ; etc.).

Il est également possible de faire en sorte que les moyens de gestion soient agencés de manière que, en cas d'arrêt de la machine amont, la machine aval fonctionne à vitesse réduite et qu'en cas d'arrêt de la machine aval, la machine amont soit arrêtée et mise en régime de veille permettant un redémarrage rapide.

Avantageusement, la machine de stockage peut être incluse dans une ligne de convoyage directe des récipients circulant entre la machine amont et la machine aval et que les moyens de gestion soient agencés pour maintenir un couloir vide positionné entre les moyens d'entrée et les moyens de sortie lorsque les machines amont et aval sont en fonctionnement normal. Le couloir ainsi maintenu vide entre les moyens d'entrée et les moyens de sortie assure la continuité des moyens de convoyage entre la machine amont et la machine aval et la machine de stockage reste alors fonctionnellement neutre en période de fonctionnement normal de la machine amont et de la machine aval.

L'invention sera mieux comprise à la lecture de la description détaillée qui suit d'un mode de réalisation préféré donné uniquement à titre d'exemple purement illustratif. Dans cette description, on se réfère aux dessins annexés sur lesquels :
- la figure 1 est une vue très schématique en plan d'une installation incluant une machine de stockage de récipients conforme à l'invention ;
- la figure 2 est une vue schématique en perspective de l'ensemble de la machine de stockage de l'invention;
- la figure 3 est une vue partielle, en coupe transversale, du tambour de la machine de stockage de la figure 2, montrant le détail de réalisation dudit tambour ;
- la figure 4 est une vue d'un détail de réalisation de la machine de la figure 2 ;
- la figure 5 est une vue de côté d'un détail de réalisation de la machine de la figure 2 ;
- la figure 6 est une vue de dessus, à échelle agrandie, du détail de réalisation de la figure 5 ; et
- la figure 7 est une vue de côté, à échelle très agrandie, d'une partie du détail de réalisation de la figure 5.

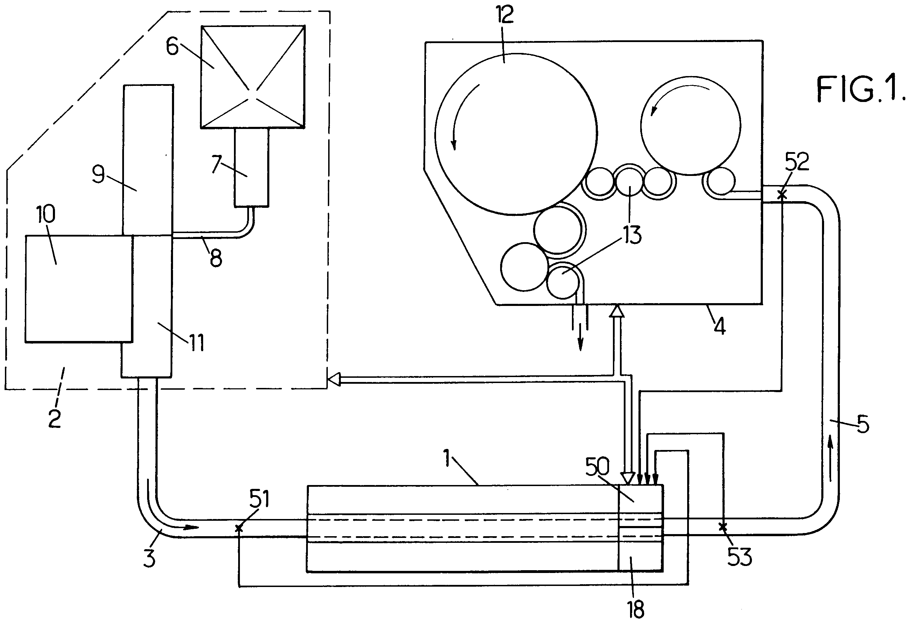

La figure 1 montre une installation du genre concerné par l'invention, dans laquelle une machine 1 de stockage de récipients est interposée entre une machine amont 2 à laquelle elle est reliée par un convoyeur amont 3 et une machine aval 4 à laquelle elle est reliée par un convoyeur aval 5. Les récipients délivrés par la machine amont 2 sont acheminés par le convoyeur 3, la machine 1 et le convoyeur 5, jusqu'à la machine aval 4.

Dans l'exemple représenté à la figure 1, la machine amont 1 est une machine de fabrication de récipients en matière plastique par soufflage ou étirage-soufflage, qui comprend notamment une trémie 6 d'alimentation en préformes, à la base de laquelle les préformes sont recueillies par un ensemble orienteur-élévateur 7 qui oriente les préformes en position verticale, orifice tourné vers le haut ; les préformes sont ensuite acheminées par un toboggan 8 vers un four à infrarouges 9 d'où elles passent dans une souffleuse ou étireuse-souffleuse 10, puis les récipients formés sont refroidis dans une enceinte de refroidissement 11 qui précède la sortie.

La machine aval 4 est une remplisseuse qui est équipée d'un carroussel de remplissage 12 associé à des transporteurs rotatifs à fourche 13 et qui délivre des récipients remplis qui sont ensuite acheminés vers des unités de conditionnement (non montrées).

Bien qu'il s'agisse là d'un exemple typique d'installation concernée par la mise en oeuvre d'une machine de stockage conforme à l'invention, cet exemple n'est pas limitatif et la machine de l'invention peut trouver application dans d'autres installations.

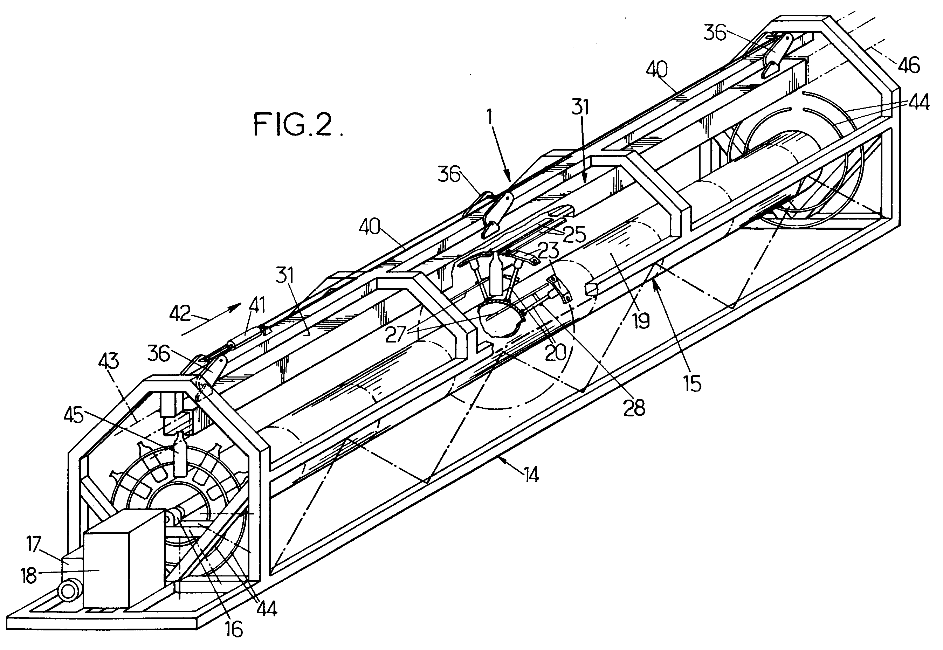

La machine de stockage 1 est représentée dans son ensemble à la figure 2. Elle comprend un bâti fixe 14, constitué par un ensemble de poutres métalliques assemblées en treillis, qui est agencé pour supporter à rotation un tambour tournant 15 supporté par des paliers 16. A une extrémité du bâti sont disposés des moyens moteurs 17 aptes à entraîner le tambour en rotation et une armoire 18 regroupant divers moyens fonctionnels nécessaires au fonctionnement de la machine et dont il sera question plus loin.

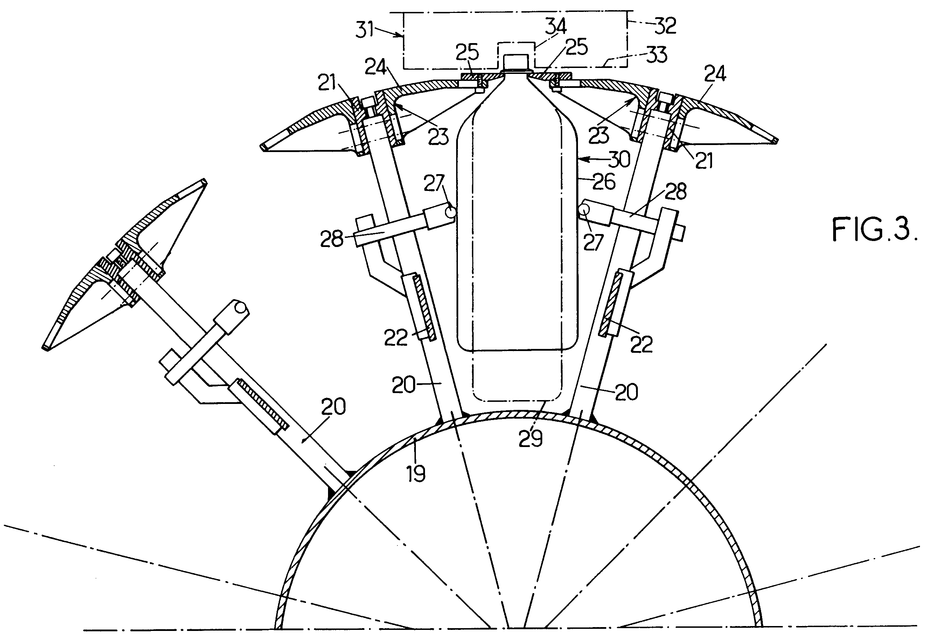

En se référant à la fois à la figure 2 et à la figure 3, le tambour 15 comporte une embase tubulaire 19 coaxiale à un arbre tourillonnant dans les paliers 16 et supportant une superstucture annulaire définissant un ensemble de couloirs (au nombre de douze dans l'exemple représenté) longitudinaux de réception de récipients.

La superstructure est constituée par des montants radiaux 20 solidaires de l'embase tubulaire 19, ces montants étant disposés en plusieurs couronnes s'étendant autour de l'embase 19 et les couronnes étant régulièrement réparties sur la longueur de l'embase. Des longerons 21 situés aux extrémités libres des montants 20 et des longerons 22 situés approximativement au milieu desdits montants s'étendent parallèlement à l'axe de l'embase 19 et solidarisent les montants de même position angulaire sur toute la longueur du tambour. On constitue ainsi une structure rayonnante rigide définissant, autour de l'embase tubulaire 19, une région annulaire qui, en section transversale, est subdivisée en secteurs angulaires (d'environ 30° dans l'exemple considéré) dégagés de tout obstacle et constituant autant de couloirs 30 pour le passage de récipients.

A l'extrémité libre des montants 20 sont montées des équerres 23 disposées transversalement à l'axe du tambour et les équerres de deux montants angulairement successifs ont des bras 24 dirigés l'un vers l'autre. Sur chaque ensemble longitudinal de bras mutuellement en vis-à-vis sont fixés respectivement deux profilés rigides 25 en forme de règles qui sont parallèles l'une à l'autre et sont écartées d'une distance légèrement supérieure au diamètre du col des récipients, de manière que des récipients 26 puissent être engagés par leur col entre les règles 25 et reposer sur celles-ci par leur collerette en s'étendant radialement comme représenté à la figure 3.

Pour assurer un maintien radial et un guidage corrects des récipients 26, on prévoit deux guides longitudinaux 27 (par exemple des tiges métalliques) disposées approximativement au milieu des montants 20 et supportés sur ceux-ci ou sur les longerons 22 par des consoles 28, de manière que leur écartement mutuel corresponde approximativement au diamètre des corps des récipients 26.

Pour assurer une grande souplesse d'emploi de la machine, la longueur des montants 20 est déterminée de manière à correspondre au moins à la hauteur du corps du plus long récipient (représenté en 29) susceptible d'être traité par l'installation. En outre, les règles 25 sont montées de façon réglable transversalement sur les bras 24 des équerres 23 ; les équerres 23 sont montées de façon réglable radialement sur les montants 20 ; de même les consoles 28 sont réglables transversalement et radialement. Il est ainsi possible d'adapter la machine à des récipients ayant des goulots et/ou des corps de diamètre (ou de forme) différentes, cette adaptation pouvant se faire de façon facile et rapide (par exemple système de règlage à vis de blocage engagées dans des lumières allongées).

Tous les secteurs angulaires définis par les montants 20 sont agencés structurellement de la même façon et tous les couloirs du tambour sont donc identiques.

Pour assurer le déplacement des récipients dans chaque couloir 30, on prévoit des moyens de convoyage 31 situés au-dessus du tambour. Ces moyens de convoyage sont du type pneumatique ou à jets d'air, comme le sont également les convoyeurs amont 3 et aval 5, de manière à conserver une homogénéité des moyens mis en oeuvre dans l'ensemble de l'installation.

La constitution générale et le mode de fonctionnement des convoyeurs à jets d'air sont connus de l'homme de l'art. Dans la machine de l'invention, il est prévu un caisson tubulaire allongé 32 situé au-dessus de la partie haute du tambour et s'étendant sur toute la longueur de celui-ci. Des moyens de soufflage (non représentés) lui sont associés pour l'alimenter en air sous pression. La face inférieure 33 du caisson 32 présente un renfoncement de section sensiblement carré ou rectangulaire formant un canal 34 pour le passage des goulots des récipients, les parois latérales dudit canal 34 étant percées de fentes pour diriger l'air sous pression sur les bouteilles et les propulser.

Le caisson 32 est fixé à la partie supérieure du bâti 14 par des moyens de fixation (dont question plus loin) qui permettent un déplacement radial du caisson par rapport au tambour. Dans sa position basse représentée à la figure 3, la face inférieure 33 du caisson 32 est rapprochée au maximum du tambour 15 de manière que le canal 34 surplombe la fente définie par les règles 25 d'un couloir 30 et que les fuites d'air entre le tambour et le canal soient réduites au minimum ; cette position est celle requise pour le déplacement des récipients. Dans sa position haute, le caisson 32 est relevé de manière que sa paroi inférieure 33 soit située au-dessus des goulots des récipients : le tambour 15 est alors libre de tourner.

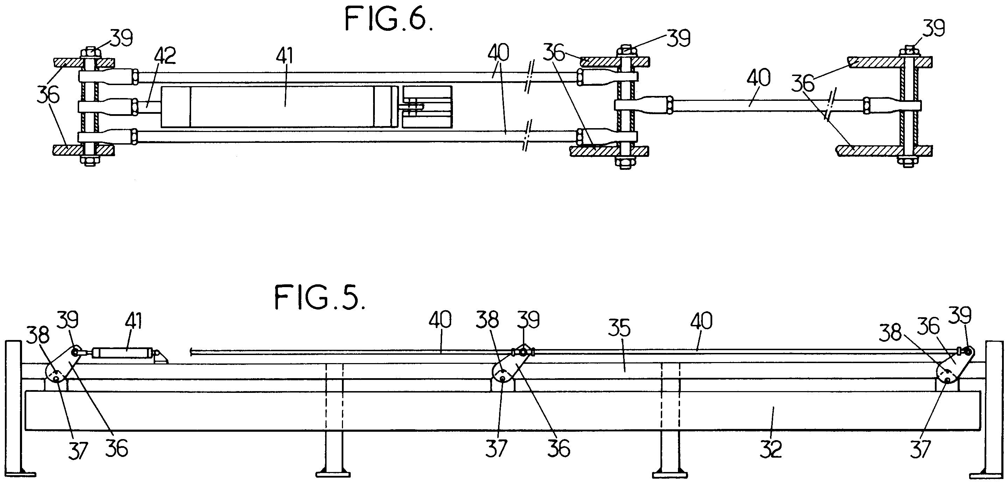

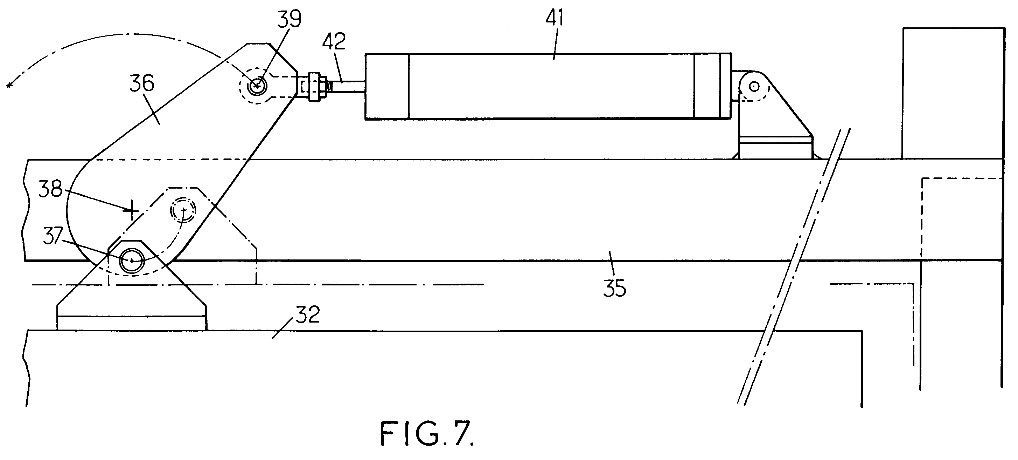

Les figures 5 à 7 représentent de façon détaillée les moyens mis en oeuvre pour le support et le déplacement vertical du caisson 32. Le caisson 32 est suspendu à une poutre longitudinale supérieure 35 du châssis 14 par l'intermédiaire de plusieurs manivelles 36 (ici trois) réparties régulièrement sur la longueur du caisson. Chaque manivelle 36 est articulée en rotation, à son extrémité inférieure, par un axe 37 au caisson 32 et, dans sa partie intermédiaire, par un axe 38 à la poutre 35 ; à son extrémité supérieure, elle est articulée en rotation, par un axe 39, sur un sytème de bielles 40 qui s'étend sur toute la longueur de la poutre 35 entre les manivelles extrêmes. Comme représenté à la figure 6, on peut prévoir des paires de manivelles 36 situées de part et d'autre de la poutre 35 et du caisson 32 et montées sur le même axe 39 ; une paire de bielles parallèles 40 accouple deux des axes 39, tandis qu'une bielle unique accouple l'un de ces axes et le dernier. Entre les deux bielles parallèles est fixé sur la poutre 35 un vérin, hydraulique ou pneumatique, 41 dont la tige de piston 42 est accouplée à un axe 39 associé aux deux bielles parallèles. On obtient ainsi un agencement symétrique susceptible de transmettre des efforts importants. Tout déplacement de la tige de vérin 42, approximativement horizontale, se traduit par un déplacement angulaire sur environ 90° des axes 37, et donc d'un déplacement vertical du caisson 32 (sa position haute étant figurée en trait mixte sur la figure 7).

Par ailleurs, on prévoit des moyens d'entrée et des moyens de sortie pour les récipients, lesquels moyens sont associés aux extrémités frontales du bâti 14. Le sens de défilement des récipients est figuré par la flèche 42 sur la figure 2. Les moyens d'entrée comprennent un caisson fixe 43 de convoyeur à jets d'air (qui peut être par exemple le tronçon terminal du convoyeur pneumatique amont 3) pour l'amenée des récipients, qui est fixé au bâti 14 pour être en regard et dans l'alignement du caisson 32 situé en position basse. En outre, cette même extrémité du bâti supporte des moyens de retenue fixes 44 destinés à retenir les récipients disposés dans le tambour 15 et constitués par exemple par des barres métalliques circulaires, disposées concentriquement et coaxialement au tambour ; ces barres ne s'étendent pas sur 360° mais laissent subsister un passage 45 à leur partie supérieure en regard de la position occupée par le couloir situé sous le caisson 32 ; la largeur de ce passage peut être adaptée au diamètre des récipients en prévoyant des bras coulissants réglables associés à ces barres de retenue (non visibles sur la figure 2).

De même les moyens de sortie, situés à l'autre extrémité frontale du bâti 14, comprennent eux aussi un caisson fixe 46 de convoyeur à jets d'air (qui peut être par exempla le tronçon initial du convoyeur pneumatique aval 5) pour l'évacuation des récipients, qui est fixé en regard et dans l'alignement longitudinal du caisson 32 en position basse. De même, cette extrémité du bâti supporte également des barres de retenue 44 agencées comme indiqué ci-dessus. En outre, il est prévu une barrière mobile (non visible) destinée à obturer le passage laissé par les barres de retenue, cette barrière mobile étant fermée lors du remplissage du couloir pour servir de butée aux récipients amenés dans celui-ci, tandis qu'il est ouvert pour permettre le passage des récipients lors du vidage du couloir.

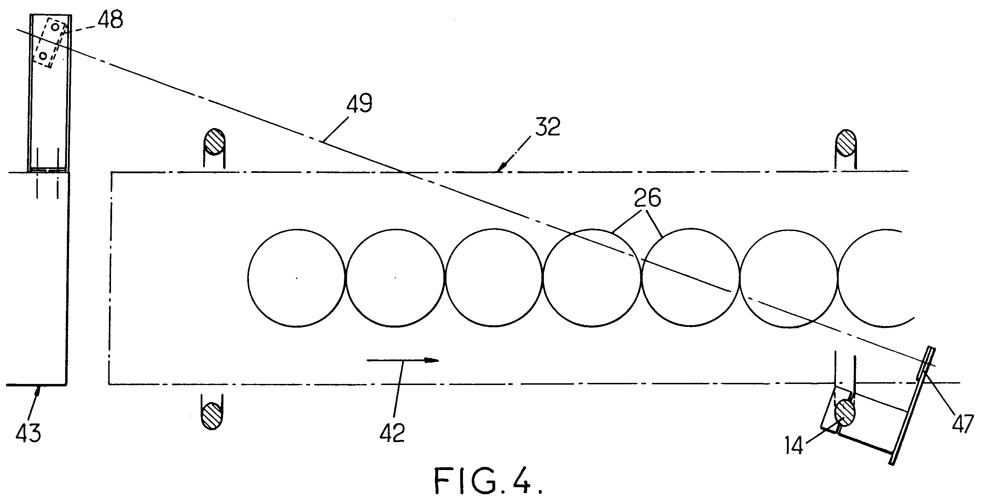

Enfin, en correspondance avec la position du couloir situé sous le caisson de convoyage 32, on prévoit des moyens de détection de remplissage du couloir, qui sont représentés à la figure 4. Au voisinage de l'extrémité d'entrée, le bâti 14 supporte une cellule photo-électrique émettrice-réceptrice 47 et un réflecteur 48 qui sont situés de part et d'autre de la trajectoire suivie par les corps des récipients déplacés dans le couloir associé aux moyens de convoyage pneumatique ; la cellule et le réflecteur sont disposés de manière que le faisceau 49 soit oblique par rapport à l'axe du couloir et intersecte cet axe environ à hauteur du sixième emplacement de récipient précédent l'extrémité d'entrée du tambour ; une temporisation déclenche l'arrêt de l'alimentation en récipients dès que la cellule 47 est occultée de façon stable et l'on est ainsi assuré que le nombre de récipients introduit dans le couloir n'excède pas la capacité de celui-ci. Bien entendu, il est également possible de constituer les moyens de détection de remplissage du couloir sous forme d'un compteur de bouteilles qui ne laisse pénétrer dans le couloir qu'un nombre prédéterminé de bouteilles.

Enfin, la machine qui vient d'être décrite est équipée de moyens de gestion 50 (disposés par exemple dans l'armoire 18) qui permettent de gérer son fonctionnement. Un exemple particulièrement intéressant de fonctionnement peut s'effectuer comme suit.

La machine 1 est incluse dans la ligne de convoyage constituée par ailleurs par les convoyeurs 3 et 5 entre les machines amont 2 et aval 4. Autrement dit, quel que soit le mode de fonctionnement sélectionné, tous les récipients allant de la machine amont 2 à la machine aval 4 passent par la machine de l'invention 1. De ce fait, les moyens de gestion sont agencés pour maintenir en permanence un couloir vide positionné en situation haute entre les caissons d'entrée et de sortie lorsque les machines amont 2 et aval 4 sont toutes deux en fonctionnement normal. La machine 1 est alors transparente et son couloir disposé en position haute constitue seulement un élément de la chaîne de convoyage reliant les machines amont et aval.

Les moyens de gestion sont en outre agencés pour commander, en début de fonctionnement, le remplissage d'un certain nombre de couloirs : par exemple trois quarts des couloirs pleins, un quart vide ou deux tiers des couloirs pleins, un tiers vide, ou enfin la moitié des couloirs pleins, l'autre moitié vide.

En cas d'incident sur la machine amont, la machine aval demeurant en fonctionnement, l'interruption de la fourniture des récipients est détectée par des capteurs amont 51 (figure 1) associés au convoyeur amont 3 et les moyens de gestion 50 commandent alors la rotation pas par pas du tambour 15 de manière que ses couloirs remplis de récipients soient successivement vidés pour que la machine aval 4 continue à être alimentée. Lorsque la machine amont est remise en service, le stock de réserve du tambour 15 est progressivement reconstitué en même temps que se poursuit l'alimentation de la machine aval.

En cas d'incident sur la machine aval 4, un premier capteur aval 52, situé à proximité de la machine aval 4, bloque l'arrivée des récipients qui s'accumulent dans le convoyeur aval 5. Un deuxième capteur aval 53 détecte le remplissage du convoyeur aval 5 et les moyens de gestion commandent alors la rotation pas par pas du tambour 15 de manière que ses couloirs vides soient remplis successivement. Lorsque la machine aval est remise en fonctionnement, les couloirs du tambour qui sont destinés à être maintenus vides sont progressivement vidés.

Il est intéressant que les moyens de gestion soient en outre aptes à commander une marche à vitesse réduite de la machine aval restant en service lorsque la machine amont est arrêtée. Non seulement il en résulte un accroissement du temps d'arrêt possible de la machine immobilisée, mais cela facilite en outre le processus de remise en fonctionnement normal et de remplissage des couloirs vidés ou de vidage des couloirs remplis du tambour en parallèle avec la reprise du fonctionnement normal.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes comprises dans l'étendue des revendications.

## Revendications

1. Machine (1) de stockage de récipients, notamment de bouteilles (26) ou analogues, destinée à être incluse entre une machine amont (2) et une machine aval (4) afin de régulariser le débit de convoyage des récipients circulant de la machine amont vers la machine aval en cas de ralentissement ou d'arrêt de brève durée de la machine amont ou de la machine aval,
caractérisée en ce qu'elle comprend en combinaison :
- un bâti allongé (14),
- un tambour allongé (15) apte à être déplacé en rotation autour d'un axe longitudinal, ledit tambour étant supporté à rotation par le susdit bâti (14),
- une pluralité de couloirs (30) de cheminement prévus sur le tambour (15) et régulièrement répartis angulairement sur la périphérie du tambour, ces couloirs étant agencés pour recevoir des récipients s'étendant sensiblement radialement en étant disposés les uns à la suite des autres,
- des moyens (17) de déplacement du tambour (15) agencés pour faire tourner le tambour pas par pas autour de son axe et amener sélectivement un couloir sélectionné en regard de moyens fixes d'entrée et de moyens fixes de sortie des récipients, lesquels moyens d'entrée et de sortie sont alignés l'un avec l'autre parallèlement à l'axe du tambour et sont supportés par les extrémités opposées du bâti, et
- des moyens pneumatiques de convoyage (31) des récipients (26) aptes à agir sur le col des récipients pour déplacer les récipients dans un couloir sélectionné amené en coïncidence avec les moyens d'entrée et de sortie des récipients, lesquels moyens pneumatiques sont supportés par le bâti (14) et sont déplaçables radialement pour occuper deux positions fonctionnelles, savoir une position basse dans laquelle ils sont radialement rapprochés du tambour (14) et coopèrent avec les goulots des récipients (26) situés dans un couloir sélectionné (30) présenté entre les moyens d'entrée et les moyens de sortie et sont aptes à faire avancer les récipients dans ledit couloir et une position haute dans laquelle ils sont radialement écartés du tambour (14) pour dégager les goulots des récipients présents dans le couloir sélectionné s'étendant entre les moyens d'entrée et les moyens de sortie et autoriser la rotation du tambour (14).

2. Machine selon la revendication 1, caractérisée en ce que chaque couloir (30) comprend deux profilés longitudinaux (25) parallèles supportés par un corps de tambour et agencés pour supporter à libre coulissement les récipients par leur col.

3. Machine selon la revendication 1 ou 2, caractérisée en ce que les moyens d'entrée et les moyens de sortie comprennent des moyens de convoyage pneumatique (43, 46) solidaires fixement des extrémités du bâti de la machine (14).

4. Machine selon la revendication 2 ou 3, caractérisée en ce que chaque couloir (30) comprend en outre des guides longitudinaux parallèles (27) supportés par le corps de tambour (14) en étant écartés radialement des susdits profilés en direction de l'axe longitudinal du tambour et aptes à constituer un appui de guidage pour les corps des récipients engagés dans le couloir.

5. Machine selon les revendications 2 et 4, caractérisée en ce que les profilés (25) et les guides longitudinaux (27) sont réglables radialement et transversalement pour adapter le couloir à des récipients de dimensions différentes (26, 29).

6. Machine selon l'une quelconque des revendications 1 à 5, caractérisée en ce que les moyens fixes de sortie des récipients comprennent également une barrière mobile sélectivement et agencée pour fermer le couloir sélectionné situé en correspondance des moyens de sortie lors d'une phase de remplissage du couloir et pour ouvrir le couloir sélectionné situé en correspondance des moyens de sortie lorsque les récipients présents dans ledit couloir doivent être évacués hors de celui-ci.

7. Machine selon l'une quelconque des revendications 1 à 6, caractérisée en ce que les moyens d'entrée, les moyens de sortie et les moyens de convoyage des récipients sont situés à la partie supérieure du bâti (14).

8. Machine selon l'une quelconque des revendications 1 à 7, caractérisée en ce qu'elle comporte en outre des moyens (47, 48) de détection du remplissage d'un couloir sélectionné qui sont situés du côté des moyens d'entrée, lesquels moyens de détection sont couplés fonctionnellement aux moyens de convoyage des récipients pour commander le fonctionnement et l'arrêt de ces derniers en fonction du remplissage dudit couloir.

9. Machine selon l'une quelconque des revendications 1 à 8, caractérisée en ce qu'elle comporte en outre des moyens (50) de gestion de son fonctionnement aptes à commander sélectivement:
- le remplissage d'une proportion requise du nombre de couloirs pleins et de couloirs vides lorsque les machines amont et aval sont en fonctionnement normal,
- la mise en rotation pas par pas du tambour et le vidage successif des couloirs remplis de récipients lorsque la machine amont est arrêtée temporairement, de manière que la machine aval continue à être alimentée en récipients,
- la mise en rotation pas par pas du tambour et le remplissage successif des couloirs vides lorsque la machine aval est arrêtée temporairement, de manière que la machine amont puisse continuer à fonctionner.

10. Machine selon la revendication 9, caratérisée en ce qu'elle est incluse dans une ligne de convoyage directe des récipients circulant entre la machine amont (2) et la machine aval (4) et en ce que les moyens de gestion (50) sont agencés pour maintenir un couloir vide positionné entre les moyens d'entrée et les moyens de sortie lorsque les machines amont et aval sont en fonctionnement normal.

11. Machine selon la revendication 9 ou 10, caractérisée en ce que les moyens de gestion (50) sont agencés de manière que, en cas d'arrêt de la machine amont (2), la machine aval (4) fonctionne à vitesse réduite et qu'en cas d'arrêt de la machine aval (4), lamachine amont (2) soit arrêtée et mise en régime de veille.

## Claims

1. A buffer storage apparatus for containers, in particular bottles (26) or the like, said apparatus being adapted to be incorporated between a beginning-of-line machine (2) and an end-of-line machine (4) in order to regulate the transport feed rate of containers circulating from the beginning-of-line machine to the end-of-line machine in the event that either of the machines is slowed or briefly stopped, characterized by comprising in combination :
- an elongated frame (14),
- an elongated drum (15) capable of being driven in rotation around a longitudinal axis, said drum being rotatively supported by said frame (14),
- a plurality of axially parallel transport slots (30) provided on the drum (15) and uniformly spaced angularly around the periphery of the drum, said slots being configured to receive containers extending substantially radially while being disposed in succession one after the other,
- drum drive means (17) arranged to rotate the drum step by step around its axis and to bring selectively a selected slot in front of stationary container feed means and stationary container removal means, said feed and removal means being aligned in conjunction parallel to the axis of the drum and being supported on opposite ends of the frame, and
- container pneumatic transport means (31) arranged to act on necks of the containers for moving said containers in a selected slot brought into a position coincident with the feed and removal means, said pneumatic means being supported on the frame (14) and being movable radially to selectively occupy two operation positions, i.e. a lowered position in which they are radially close to the drum (14) and engage the necks of the containers (26) located in a selected slot (30) brought into position between the feed and removal means and are able to move the containers forward in said slot, and a raised position in which they are radially away from the drum (14) to release the necks of the containers in the selected slot extending between the feed and removal means and permit rotation of the drum (14).

2. An apparatus according to claim 1, characterized by that each slot (30) comprises two longitudinal, parallel support sections (25) carried by a body of the drum, and arranged to support containers by the neck thereof with a free sliding.

3. An apparatus according to claim 1 or 2, characterized in that the feed means and the removing means comprise pneumatic transport means (43, 46) fixed on ends of the apparatus frame.

4. An apparatus according to claim 2 or 3, characterized in that each slot (30) further comprises parallel longitudinal guides (27) carried by the body of the drum (14) while being radially spaced from said support sections toward the longitudinal axis of the drum and adapted for guiding bodies of the containers introduced in the slot.

5. An apparatus according to claim 2 and 4, characterized in that said support sections (25) and said longitudinal guides (27) are radially and transversely adjustable so as to adapt the slot to containers of different dimensions (26, 29).

6. An apparatus according to anyone of claims 1 to 5, characterized by that the stationary removal means for the containers comprise also a selectively movable barrier which is arranged for closing the selected slot located in correspondance with the removal means during a slot filling step and for opening the selected slot located in correspondance with the removal means when containers in said slot must be removed.

7. An apparatus according to anyone of claims 1 to 6, characterized in that the means for feeding, removing, and transporting the containers are positioned on an upper part of the frame (14).

8. An apparatus according to anyone of claims 1 to 7, characterized by further comprising detection means (47, 48) for detecting the filing of a selected slot, said detection means being located in the vicinity of the feeding means and being operationally coupled with container transport means for controlling the operation and the stoppage thereof in relation with the filling of said slot.

9. An apparatus according to anyone of claims 1 to 8, characterized by further comprising operational-control means (50) adapted for selectively controling :
- the filling with a predetermined rate of the number of full slots and empty slots when the beginning-of-line and end-of-line machines are in normal operation,
- the step-by-step rotation of the drum and the successive emptying of the slots filled with containers when the beginning-of-line machine is temporarily stopped, so that the end-of-line machine continues to be fed with containers,
- the step-by-step rotation of the drum and the successive filling of the empty slots when the end-of-line is temporarily stopped, so that the beginning-of-line machine may continue its operation.

10. An apparatus according to claim 9, characterized by being included in a direct transport line between the beginning-of-line machine (2) and the end-of-line machine (4) and in that said operational-control means (50) are adapted for maintaining an empty slot located between the feed means and the removal means when the beginning-of-line and end-of-line machines have a normal operation.

11. An apparatus according to claim 9 or 10, characterized by that said operational-control means (50) is adapted for reducing the speed of the end-of-line machine (4) in the event of a failure of the beginning-of-line machine (2), and for stopping and waiting positionning the beginning-of-line machine (2) in the event of a stoppage of the end-of-line machine (4).

## Patentansprüche

1. Speichervorrichtung (1) für Behälter, insbesondere für Flaschen (26) oder dgl., die so ausgelegt ist, daß sie zwischen einer stromaufwärts liegenden Vorrichtung (2) und einer stromabwärts liegenden Vorrichtung (4) eingefügt werden kann, um die Förderleistung der von der stromaufwärts liegenden Vorrichtung zur stromabwärts liegenden Vorrichtung laufenden Behälter im Falle einer Verlangsamung oder eines kurz andauernden Stillstandes der stromaufwärts liegenden Vorrichtung oder der stromabwärts liegenden Vorrichtung zu regulieren,
dadurch gekennzeichnet, daß sie in Kombination umfaßt:
- einen langgestreckten Tragrahmen (14),
- eine langgestreckte Trommel (15), die so ausgebildet ist, daß sie um eine Längsachse drehverstellbar ist, wobei die Trommel an dem Tragrahmen (14) drehgelagert ist,
- eine Mehrzahl von Führungsgängen (30), die auf der Trommel vorgesehen sind und gleichmäßig, winkelförmig auf dem Umfang der Trommel verteilt sind, wobei die Gänge so eingerichtet sind, daß sie die nacheinander angeordneten, sich im wesentlichen radial erstreckenden Behälter aufnehmen,
- Mittel (17) zur Verstellung der Trommel (15), die so ausgebildet sind, daß sie die Trommel schrittweise um ihre Achse drehen lassen und feststehenden Eingangsmitteln und feststehenden Ausgangsmitteln für die Behälter wahlfrei einen ausgewählten Gang gegenüberstellen, wobei die Eingangs- und Ausgangsmittel miteinander parallel zur Trommelachse ausgerichtet sind und von den gegenüberliegenden Enden des Tragrahmens abgestützt sind, und
- Pneumatikmittel (31) zur Förderung der Behälter (26), die derart ausgebildet sind, daß sie auf den Hals der Behälter einwirken, um die Behälter in einen in Übereinstimmung mit den Eingangs- und Ausgangsmitteln der Behälter herangeführten, ausgewählten Gang zu bewegen, wobei die Pneumatikmittel durch den Tragrahmen (14) abgestützt sind und so verstellbar sind, daß sie zwei Funktionsstellungen einnehmen können, nämlich eine Tiefstellung, in welcher sie radial nahe an die Trommel (14) herangerückt sind und mit den Hälsen der Behälter (26) kooperieren, die in einem zwischen den Eingangsmitteln und den Ausgangsmitteln vorhandenen, ausgewählten Gang (30) angeordnet sind, und derart ausgebildet sind, daß sie die Behälter in diesem Gang fortbewegen, und eine Hochstellung, in welcher sie von der Trommel (14) radial entfernt sind, um die Hälse der Behälter, die in dem sich zwischen den Eingangsmitteln und den Ausgangsmitteln erstreckenden, ausgewählten Gang vorliegen, freizugeben und die Drehung der Trommel (14) zuzulassen.

2. Vorrichtung nach Anspruch 1,
dadurch gekennzeichnet,
daß jeder Gang (30) zwei parallele Längsprofile (25) aufweist, die durch einen Trommelkörper abgestützt sind und so ausgebildet sind, daß sie die Behälter an ihrem Hals frei verschiebbar tragen.

3. Vorrichtung nach Anspruch 1 oder 2,
dadurch gekennzeichnet,
daß die Eingangsmittel und die Ausgangsmittel pneumatische Fördermittel (43, 46) umfassen, die einstückig an den Enden des Tragrahmens der Vorrichtung (14) befestigt sind.

4. Vorrichtung nach Anspruch 2 oder 3,
dadurch gekennzeichnet,
daß jeder Gang (30) außerdem parallele Längsführungen (27) aufweist, die an dem Trommelkörper (14) radial von den Profilen entfernt in Richtung der Trommellängsachse abgestützt sind und so ausgebildet sind, daß sie ein Gleitlager für die in den Gang eingesetzten Behälterkörper bilden.

5. Vorrichtung nach den Ansprüchen 2 und 4,
dadurch gekennzeichnet,
daß die Profile (25) und die Längsführungen (27) radial und transversal verstellbar sind, um den Gang an Behälter mit unterschiedlichen Abmessungen (26,29) anpassen zu können.

6. Vorrichtung nach einem der Ansprüche 1 bis 5,
dadurch gekennzeichnet,
daß die feststehenden Ausgangsmittel der Behälter jeweils eine bewegliche Sperre aufweisen, die frei wählbar ist und so ausgebildet ist, daß sie den in Korrespondenz mit den Ausgangsmitteln liegenden, ausgewählten Gang während einer Befüllungsphase eines Ganges verschließen und den in Korrespondenz mit den Ausgangsmitteln liegenden, ausgewählten Gang öffnen kann, wenn die in dem Gang vorhandenen Behälter aus diesem ausgebracht werden müssen.

7. Vorrichtung nach einem der Ansprüche 1 bis 6,
dadurch gekennzeichnet,
daß die Eingangsmittel, die Ausgangsmittel und die Fördermittel der Behälter an dem Oberteil des Tragrahmens (14) angeordnet sind.

8. Vorrichtung nach einem der Ansprüche 1 bis 7,
dadurch gekennzeichnet,
daß sie ferner Mittel (47, 48) zur Erfassung der Füllung eines ausgewählten Ganges aufweisen, die am Rande der Eingangsmittel angeordnet sind, wobei die Erfassungsmittel mit den Fördermitteln der Behälter funktionell verbunden sind, um den Betrieb und den Stillstand der letzteren in Abhängigkeit von der Befüllung des ausgewählten Ganges zu steuern.

9. Vorrichtung nach einem der Ansprüche 1 bis 8,
dadurch gekennzeichnet,
daß sie ferner Mittel (50) zur Steuerung ihres Betriebes aufweist, die derart ausgebildet sind, daß sie wahlfrei steuern:
- die Befüllung in einem erforderlichen Verhältnis der Anzahl voller Gänge zu leerer Gänge, während die stromaufwärts und die stromabwärts liegende Vorrichtung im Normalbetrieb sind,
- die schrittweise Drehführung der Trommel und die nacheinander erfolgende Entleerung mit Behältern gefüllter Gänge, während die stromaufwärts liegende Vorrichtung zeitweise stillsteht, so daß die stromabwärts liegende Vorrichtung weiter mit Behältern versorgt wird,
- die schrittweise Drehführung der Trommel und die nacheinander erfolgende Befüllung der leeren Gänge, während die stromabwärts liegende Vorrichtung zeitweise stillsteht, so daß die stromaufwärts liegende Vorrichtung weiter arbeiten kann.

10. Vorrichtung nach Anspruch 9,
dadurch gekennzeichnet,
daß sie in eine direkte Förderlinie von zwischen der stromaufwärts liegenden Vorrichtung (2) und der stromabwärts liegenden Vorrichtung (4) laufenden Behältern eingefügt ist und daß die Steuermittel (50) so ausgebildet sind, daß sie einen Gang positioniert zwischen den Eingangsmitteln und den Ausgangsmitteln halten, wenn die stromaufwärts liegende und die stromabwärts liegende Vorrichtung im Normalbetrieb sind.

11. Vorrichtung nach Anspruch 9 oder 10,
dadurch gekennzeichnet,
daß die Steuermittel (50) so ausgebildet sind, daß im Fall eines Stillstandes der stromaufwärts liegenden Vorrichtung (2) die stromabwärts liegende Vorrichtung (4) mit reduzierter Geschwindigkeit arbeitet und daß im Fall eines Stillstandes der stromabwärts liegenden Vorrichtung (4) die stromaufwärts liegende Vorrichtung (2) angehalten und in einem Bereitschaftszustand versetzt wird.
